# EUROPEAN PATENT APPLICATION

(11) **EP 2 608 543 A2**
(43) Date of publication of application: **26.06.2013**
(21) Application number: 11818363.1
(22) Date of filing: 12.08.2011
(51) Int. Cl.: H04N 7/36

(54) **INTER PREDICTION ENCODING METHOD**

(30) Priority: 30.06.2011 KR 20110064306; 17.08.2010 KR 20100079530
(71) Applicant: Oh, Soo-mi, Seoul 138-908 (KR)
(72) Inventor: Oh, Soo-mi, Seoul 138-908 (KR)
(74) Representative: Grünecker, Kinkeldey, Stockmair & Schwanhäusser
(86) International application number: PCT/KR2011/005942
(87) International publication number: WO 2012/023763

(57) **Abstract**

Provided is an inter prediction encoding method that determines a reference picture index and a motion vector of a current prediction unit, determines available motion vectors of prediction units located at a predetermined position adjacent to the current prediction unit as spatial motion vector candidates, determines available temporal motion vector candidates of the current prediction unit, determines one of the spatial and the temporal motions vector candidates as a motion vector predictor of the current prediction unit, and calculates a motion vector difference between the motion vector of the current prediction unit and the motion vector predictor and encodes the motion vector difference and the reference picture index. Therefore, it is possible to reduce the amount of coding bits required to encode motion information of the current prediction unit by using a motion vector candidate effectively predicting motion vector not only when motion of image is ordinary but also when the motion of image is little or steady or the image to be encoded is a background image.

## Description

### [Technical Field]

The present invention relates to an inter prediction encoding method, and more particularly, to an inter prediction encoding method of encoding a motion vector of a current prediction unit using one of a motion vector of a prediction unit adjacent to the current prediction unit and a motion vector located at predetermined position of a reference picture encoded previously.

### [Background Art]

The present invention relates to a device and a method for encoding and decoding by predicting a motion vector of a current prediction unit.

In image compression methods such as Motion Picture Experts Group (MPEG)-1, MPEG-2, MPEG-4 and H.264/MPEG-4 Advanced Video Coding (AVC), one picture is divided into macroblocks to encode an image, And, the respective macroblocks are encoded using inter prediction or intra prediction. Then, an optimal coding mode is selected in the bases of a data size of a macroblock to be endoded and distortion of an original macroblock, and the macroblock is encoded.

In the inter prediction, a motion estimation is used to eliminate temporal redundancy between consecutive pictures. The motion estimation coding is a method which encodes an image by estimating and compensating a motion of the current picture in the unit of block using one or more reference pictures.

In the motion estimation coding, the block most similar to the current block is searched within a predetermined search range for a reference picture using a predetermined estimation function. If the most similar block is searched, only residue between the current block and the most similar block in the reference picture is transmitted to raise a data compression ratio.

At this time, to decode the motion estimation coded current block, information for the motion vector indicating a position difference between the current block and the similar block in the reference picture. Therefore, it is required to insert encoded information for the motion vector into a bitstream when the current block is encoded. In this process, if the information for the motion vector is encoded and inserted as it is, a compression ratio of an image data is decreased because overhead is increased.

Therefore, in the inter prediction encoding, a motion vector of the current block is predicted using blocks adjacent to the current block, only a difference value between the generated motion vector predictor and the original motion vector is encoded and transmitted, and the information of the motion vector is also compressed.

In H.264, the motion vector predictor, which is a predictor of a motion vector of the current block, is determined as a median of mvA, mvB and mvC. As neighboring blocks are inclined to be similar each other, the motion vector of the current block is determined as a median of the motion vectors of the neighboring blocks.

But, if one or more motion vectors of the neighboring blocks are different from the motion of the current block, the median of the motion vectors of the neighboring blocks may be not an effective motion vector predictor for the current block. Also, a method of selecting a candidate for predicting a motion vector and of encoding or decoding the motion vector more effectively compared to the known motion prediction method is required when the motion of image is little or steady.

### [Disclosure]

### [Technical Problem]

The present invention is directed to provide an inter prediction method of encoding a motion vector of a current prediction unit using one of motion vectors of a prediction unit adjacent to a current prediction unit and motion vectors located at a predetermined position in a reference picture encoded previously.

### [Technical Solution]

One aspect of the present invention provides an inter prediction encoding method, comprising: determining a reference picture index and a motion vector of a current prediction unit, deriving spatial motion vector candidates using available motion vectors of neighboring prediction units each of which exists at a predetermined position, deriving temporal motion vector candidate of the current prediction unit, determining one of the spatial and the temporal motion vector candidates as a motion vector predictor of the current prediction unit, calculating a motion vector difference between the motion vector of the current prediction unit and the motion vector predictor, and encoding the motion vector difference and the reference picture index, wherein the temporal motion vector candidates are motion vectors of the current prediction unit each of which exists at a position in a reference picture encoded previously and corresponding to the current prediction unit or motion vectors of a prediction unit adjacent to the current prediction unit.

### [Advantageous Effects]

A method according to the present invention derives spatial motion vector candidates using available motion vectors of neighboring prediction units adjacent to a current unit and existing at a predetermined position, derives temporal motion vector candidate of the current prediction unit using motion vectors of the current prediction unit each of which exists at a position in a reference picture encoded previously and corresponding to the current prediction unit or motion vectors of a prediction unit adjacent to the current prediction unit. And the method determines one of the spatial and temporal motions vector candidates as a motion vector predictor and calculates a motion vector difference between the motion vector of the current prediction unit and the motion vector predictor. Therefore, it is possible to reduce the amount of coding bits required to encode motion information of the current prediction unit using the temporal and the spatial motion vector candidates.

### [Description of Drawings]

FIG. 1 is a block diagram of an inter prediction encoding device according to the present invention.
FIG. 2 is a block diagram of an inter prediction decoding device according to the present invention.
FIG. 3 is a flow chart illustrating a procedure of generating a reconstructed block of a skipped coding prediction unit according to the present invention.
FIG. 4 is a conceptual diagram showing positions of spatial skip candidates according to the present invention.
FIG. 5 is a conceptual diagram showing the positions of prediction units used to derive temporal skip candidates according to the present invention.
FIG. 6 is a conceptual diagram illustrating positions of blocks in a temporal skip candidate picture corresponding to a current prediction unit according to the present invention.
FIG. 7 is a flow chart illustrating a procedure of generating a reconstructed block for the prediction unit motion vector prediction encoded according to the present invention.
FIG. 8 is a conceptual diagram showing positions of prediction units adjacent to the current prediction unit used to generate spatial motion vector candidates according to the present invention.

### [Mode for Invention]

Hereinafter, various embodiments of the present invention will be described in detail with reference to the accompanying drawings. However, the present invention is not limited to the exemplary embodiments disclosed below, but can be implemented in various types. Therefore, many other modifications and variations of the present invention are possible, and it is to be understood that within the scope of the disclosed concept, the present invention may be practiced otherwise than as has been specifically described.

A picture is divided into a plurality of slices, and each slice is divided into a plurality of largest coding units (LCUs). The position of each LCU is designated by an address indicator. The LCU may be a coding unit itself or may be divided into a plurality of coding units. The LCU contains information indicating structure of coding units in the LCU. One or more split flags are used to indicate the structure of coding units in the LCU.

Each coding unit consists of one or more prediction units. The prediction unit is a basic unit for intra prediction or inter prediction.

A transform unit is a basic block for transform coding. In intra prediction, the prediction unit contains one or more transform units. In inter prediction, a transform unit may be comprised of one or more prediction units. The maximum size of the prediction unit is defined in a sequence parameter set (SPS), and the transform unit may be divided into a form of a recursive quad tree. The maximum size of the prediction unit in intra prediction may be different from that of the prediction unit in inter prediction. The maximum sizes of the prediction unit in intra prediction and inter prediction are contained the SPS.

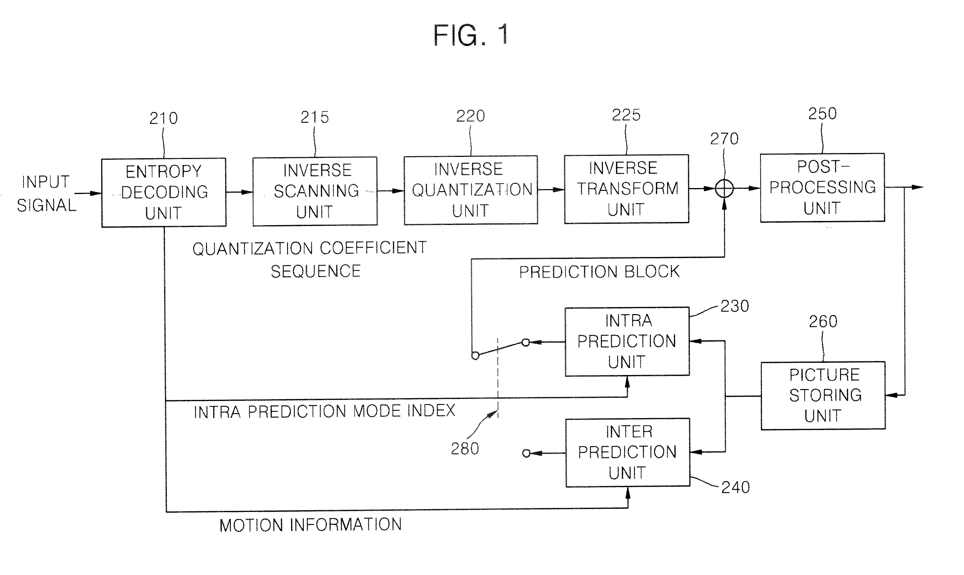

FIG. 1 is a block diagram of an inter prediction encoding device according to the present invention.

Referring to Fig. 1, an inter prediction encoding device 100 according to the present invention includes a picture division unit 110, a transform unit 120, a quantization unit 130, a scanning unit 131, an entropy coding unit 140, an intra prediction unit 150, an inter prediction unit 160, an inverse quantization unit 135, an inverse transform unit 125, a post-processing unit 170, a picture storing unit 180, a subtracter 190 and an adder 195.

The picture division unit 110 divides analyzes an input video signal to divide each LCU of a picture into one or more coding units each of which has a predetermined size, determine prediction mode of each coding unit, and determines size of prediction unit per each coding unit. The picture division unit 110 sends the prediction unit to be encoded to the intra prediction unit 150 or the inter prediction unit 160 according to the prediction mode. Also, the picture division unit 110 sends the prediction units to be encoded to the subtracter 190.

The transform unit 120 transforms residual blocks which are residual signals between an original block of a prediction unit and a prediction block generated by the intra prediction unit 150 or the inter prediction unit 160. The residual block may be composed of a coding unit. The residual block composed of a coding unit may be divided into optimal transform units and transformed. A transform matrix may be adaptively determined according to a prediction mode (intra or inter) and an intra prediction mode. The transform unit may be transformed by horizontal and vertical one-dimensional (ID) transform matrices. In inter prediction, one predetermined transform matrix is applied.

In intra prediction, there is a high possibility that the residual blocks will have vertical directivity when the intra prediction mode is horizontal. Thus, a discrete cosine transform (DCT)-based integer matrix is applied to the vertical direction, and a discrete sine transform (DST) or Karhunen Loève transform (KLT)-based integer matrix is applied to the horizontal direction. When the intra prediction mode is vertical, a DST or KLT-based integer matrix is applied to the vertical direction, and a DCT-based integer matrix is applied to the horizontal direction. When the intra prediction mode is DC, DCT-based integer matrix may be applied to both directions. That is, in intra prediction, the transform matrix may be adaptively determined according to a size of the transform units and intra prediction modes.

The quantization unit 130 determines a quantization step size for quantizing transform coefficients of the residual block transformed by the transform matrix. The quantization step size is determined on a coding unit having a size equal to or larger than a predetermined size. For coding unit having a size smaller than the predetermined size, the quantization step size is determined on the predetermined size. Using the determined quantization step size and a quantization matrix determined according to a prediction mode, the transform coefficients of the transform block are quantized. The quantization unit 130 may determine a quantization step size of neighboring coding unit as a quantization step size predictor of the current coding unit. For example, the quantization unit 130 may determine a quantization step size of a left coding unit of the current coding unit as a quantization step size predictor. If the left coding unit is unavailable, the quantization step size of the previous coding unit in scan order is determined as the quantization step size predictor of the current coding unit. Alternatively, a first available quantization step size is determined as the quantization step size predictor by scanning in the order of a left coding unit, above coding unit and a previous coding unit.

The quantized transform block is provided to the inverse quantization unit 135 and the scanning unit 131.

The scanning unit 131 scans the quantized transform coefficients of the quantized transform block, thereby converts the quantized transform coefficients into ID quantized transform coefficients. A scan pattern is determined according to the prediction mode and the intra prediction mode. The scan pattern may also be determined according to the size of the transform unit.

The scanning unit 131 determines whether or not to divide the quantized transform block into a plurality of subsets according to the size of the current transform unit. If the size of the transform unit is larger than a first reference size, the quantized transform block is divided into the plurality of subsets. The first reference size is 4x4 or 8x8.

The scanning unit 131 determines a scan pattern to be applied to the quantized transform block. In inter prediction, a predetermined scan pattern (for example, zigzag scan) is used. In intra prediction, the scan pattern is selected based on the intra prediction mode and the size of the transform unit. In non-directional intra prediction mode, a predetermined pattern is used. The non-directional intra prediction mode is a DC mode or a planar mode.

In directional intra prediction mode, the scan pattern may be varied according to the intra prediction mode and the size of the transform unit. In the directional intra prediction mode, the predetermined scan pattern is used if the size of the transform unit is equal to or larger than a predetermined size, and a scan pattern is adaptively selected based on the directional intra prediction mode if the size of the transform unit is smaller than the predetermined size. The predetermined size is 16x16.

If the size of the transform unit is smaller than the predetermined size, one of three scan patterns is used. The three scan patterns are a first scan pattern (a predetermined scan), a second scan pattern (a horizontal scan) and a third scan pattern (a vertical scan). For vertical intra prediction mode, the second scan pattern is applied because it is highly probable that the non-zero coefficients exist in the horizontal direction. For a predetermined number of directional intra prediction modes adjacent to the vertical intra prediction mode in both sides, the second scan pattern is applied. For horizontal intra prediction mode, the third scan pattern is applied. For the predetermined number of directional intra prediction modes adjacent to the horizontal intra prediction mode in both sides, the third scan pattern is applied. The predetermined number is 3 or 4.

The quantized transform coefficients are scanned in reverse direction. When the quantized transform coefficients are divided into a plurality of subsets, same scan pattern is applied to the quantized transform coefficients of each subset. The plurality of subsets consist of one main subset and one or more remaining subsets. The main subset is located at an upper left side and includes a DC coefficient. The one or more remaining subsets cover region other than the main subset.

Zigzag scan may be applied to scan the subsets. The subsets may be scanned beginning with the main subset to the remaining subsets in a forward direction, or can be scanned in a reverse direction. A scan pattern for scanning the subsets may be set the same as a scan pattern for scanning the quantized transform coefficients. In this case, the scan pattern for scanning the subsets is determined according to the intra prediction mode.

An encoder transmits information capable of indicating a position of the last non-zero quantized coefficient of the transform unit to a decoder. The encoder also transmits information capable of indicating a position of the last non-zero quantized coefficient of each subset to the decoder.

The inverse quantization unit 135 inversely quantizes the quantized transform coefficients. The inverse transform unit 125 restores residual blocks of the spatial domain from the inversely quantized transform coefficients. The adder generates a reconstructed block by adding the residual block reconstructed by the inverse transform unit 125 and the prediction block from the intra prediction unit 150 or the inter prediction unit 160.

The post-processing unit 170 performs a deblocking filtering process for removing blocking artifact generated in a reconstructed picture, an adaptive offset application process for complementing a difference between the reconstructed picture and the original image per pixel, and an adaptive loop filter process for complementing a difference between the reconstructed picture and the original image in a coding unit.

The deblocking filtering process may be applied to a boundary between prediction units having a predetermined size or more and a boundary between transform units. The predetermined size may be 8×8. The de-blocking filtering process includes a step of determining a boundary to be filtered, a step of determining boundary filtering strength to be applied to the boundary, a step of determining whether or not to apply a deblocking filter, and a step of selecting a filter to be applied to the boundary when it is determined to apply the de-blocking filter.

Whether or not to apply the deblocking filter is determined according to i) whether or not the boundary filtering strength is greater than 0 and ii) whether or not a value indicating the difference between boundary pixels of P block and Q block is smaller than a first reference value determined according to a quantization parameter.

Two or more filters may exist. When an absolute value of a difference between two pixels adjacent to the block boundary is equal to or larger than a second reference value, a weak filter is selected. The second reference value is determined by the quantization parameter and the boundary filtering strength.

The adaptive loop filter process may be performed on the basis of a value obtained by comparing an original image and a reconstructed image to which the de-blocking filtering process or the adaptive offset application process is applied. An adaptive loop filter (ALF) is detected through one Laplacian activity value on the basis of a 4×4 block. The determined ALF can be applied to all pixels included in a 4×4 block or an 8×8 block. Whether or not to apply an ALF may be determined according to coding units. A size and coefficients of a loop filter may vary according to each coding unit. A slice header may include information indicating whether or not to apply the ALF to each coding unit, filter coefficient information and filter shape information, and so on. In the case of chrominance components, whether or not to apply the ALF may be determined in picture units. Unlike luminance, the loop filter may have a rectangular shape.

The adaptive loop filter process may be performed on the basis of a value obtained by comparing an original image and a reconstructed image to which the deblocking filtering process or the adaptive offset application process is applied. An adaptive loop filter (ALF) is detected through one Laplacian activity value on the basis of a 4×4 block. The determined ALF can be applied to all pixels included in a 4×4 block or an 8×8 block. Whether or not to apply an ALF may be determined according to coding units. A size and coefficients of a loop filter may vary according to each coding unit. Information indicating whether ALF is applied to each coding unit, filter coefficient information and filter shape information may be included in slice header and transmitted to the decoder. In the case of a chrominance signal, whether or not to apply the ALF may be determined in picture units. Unlike luminance, the loop filter may have a rectangular shape.

The adaptive loop filter process is performed on the basis of sequence or picture. The ALF filter parameter information is included in picture header or slice header. If the ALF filter parameter information is included in a picture header, the slice header does not contain the ALF filter parameter information. But, if the ALF filter parameter information is not included in the picture header, the slice header contains the ALF filter parameter information. The ALF filter parameter information includes a horizontal length and/or a vertical length of the filter for luminance components and a number of filters. If the number of filter is 2 or more, the ALF filter parameter information may contain information indicating whether the filters are encoded using prediction or not. The ALF filter parameter information includes the filter coefficients encoded predictively when the filters are encoded using prediction. On the contrary, the ALF filter parameter information includes the filter coefficients encoded unpredictively when the filters are encoded not using prediction.

Chrominance components may also be filtered adaptively. The ALF filter parameter information may include information whether each chrominance component is filtered or not. To reduce the amount of bits, the information indicating whether the Cr component is filtered and information indicating whether the Cb component is filtered may be coded jointly. It is preferable that an entropy coding which assigns the lowest information for the case that none of Cr and Cb components are not filtered because the probability that none of Cr and Cb components are not filtered is high. For the case that at least one of Cr and Cb components is filtered, the ALF filter parameter information includes information indicating a horizontal length and/or a vertical length of the filter coefficients for the chrominance components and information of filter.

Also, the ALF process may be on or off per coding units equal to or larger than a predetermined size. Thus, each slice header contains information indicating whether the ALF process is applied or not per coding unit in the slice.

The picture storing unit. 180 receives post-processed image data from the post-processing unit 160, and stores the image in picture units. A picture may be an image in a frame or a field. The picture storing unit 180 has a buffer (not shown) capable of storing a plurality of pictures.

The inter prediction unit 150 performs motion estimation using one or more reference pictures stored in the picture storing unit 180, and determines reference picture indexes indicating the reference pictures and motion vectors. According to the reference picture index and the motion vector, the inter prediction unit 150 extracts a prediction block corresponding to a prediction unit to be encoded from a reference picture selected among a plurality of reference pictures stored in the picture storing unit 150 and outputs the extracted prediction block.

The intra prediction unit 140 performs intra prediction using reconstructed pixel values within a current picture. The intra prediction unit 140 receives the current prediction unit to be predictively encoded, selects one of a predetermined number of intra prediction modes, and performs intra prediction. The predetermined number of intra prediction modes may depend on the size of the current prediction unit. The intra prediction unit adaptively filters the reference pixels to generate the intra prediction block. When some of reference pixels are not available, it is possible to generate the reference pixels at the unavailable positions using one or more available reference pixels.

The entropy coding unit 130 entropy-codes the quantized coefficients quantized by the quantization unit 130, intra prediction information received from the intra prediction unit 140, motion information received from the inter prediction unit 150, and so on.

Meanwhile, the moving picture coding device 100 according to the present invention predictively encodes the motion vector. The encoding procedure of the motion vector is performed by the inter prediction unit 150 and the entropy coding unit 140. The encoding procedure of the motion vector is as follows.

First, a motion vector of the current prediction unit is obtained. Available motion vectors of neighboring prediction units existing at predetermined positions are determined as spatial motion vector candidates. If the motion vector of neighboring prediction unit does not exist or the neighboring prediction unit is not included in the current slice, the motion vector is determined as unavailable.

Next, the spatial motion vector may be scaled adaptively. If the current prediction unit and the neighboring prediction unit have same reference picture, the motion vector candidate is not scaled. But, if the current prediction unit and the neighboring prediction unit have different reference pictures, or the temporal distances of the reference picture are not same, the motion vector candidate may be scaled using the temporal distances. The motion vector may not be scaled for a still image (for example, background image). The number of scaling of the spatial motion vector candidate may be limited to a predetermined number.

A motion vector predictor is selected among the spatial motion vector candidates and the temporal motion vector candidate and then, the motion vector difference (MVD) between the motion vector of the current prediction unit and the motion vector predictor is encoded. And the information indicating the motion vector predictor is encoded.

The temporal motion vector candidate is a motion vector of a prediction unit which is located at or nearby a position in one reference picture corresponding to the position of the current prediction unit. When there exist a plurality of motion vectors of a prediction unit which is located at or nearby a position in one reference picture corresponding to the position of the current prediction unit in the reference picture, one motion vector is selected as a temporal motion vector according to a predetermined method. For example, if the motion vector of the block located at a first position corresponding to the current prediction unit in the picture is available, the motion vector is determined as the temporal motion vector candidate. But, if the motion vector of the block located at the first position is unavailable, the motion vector of a block located at a second position is determined as the temporal motion vector candidate.

In B slice (bi-directional prediction), the reference picture containing the temporal motion vector candidate is derived reference picture list 0 or 1. Therefore, the list information indicating one reference picture list is transmitted to a decoder, and the decoder determines the reference picture using the list indicator.

Information indicating whether the temporal motion vector candidate is used or not may be included in the bit stream. Therefore, the decoding procedure of the motion vector may vary according to the information.

The spatial motion vector candidates include a left motion vector candidate and an above motion vector candidate. The left motion vector candidate of the current prediction unit is a motion vector of a left prediction unit or a motion vector of a left below prediction unit of the current prediction unit. The left motion vector candidate is a first available motion vector encountered when retrieving the motion vectors of the left prediction unit and the left below prediction unit in a predetermined order. The above motion vector candidate of the current prediction unit is a first available motion vector encountered when retrieving the motion vectors of an above prediction unit, an above right prediction unit and an above left prediction unit of the current prediction unit in a predetermined order.

If motion vector candidates have the same motion vectors, the motion vector candidate having large order is eliminated. If the motion vector candidate is one, the motion vector candidate is determined as motion vector predictor, and the predictor indicator indicting the motion vector predictor is not encoded.

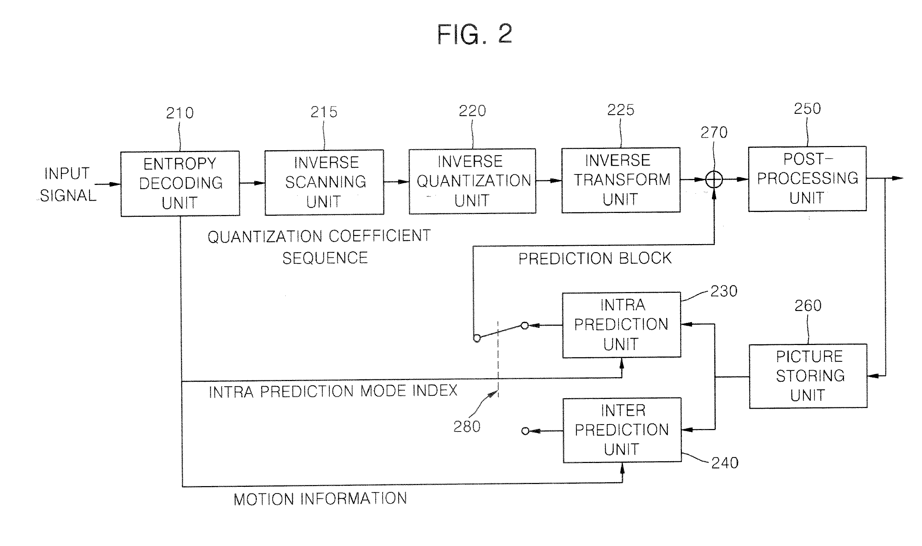

FIG. 2 is a block diagram of an intra prediction decoding device according to the present invention.

The decoding device according to the present invention includes an entropy decoding unit 210, an inverse scanning unit 215, an inverse quantization unit 220, an inverse transform unit 225, an adder 270, a post-processing unit 250, a picture storing unit 260, an intra prediction unit 230, an inter prediction unit 240 and a intra/inter conversion switch 280.

The entropy decoding unit 210 extracts intra prediction mode indexes, motion vectors, quantized coefficients sequences, and so on from a received bit stream transmitted from a moving picture coding apparatus. The entropy decoding unit 210 transmits the decoded motion information to the inter prediction unit 240, the intra prediction mode information to the intra prediction unit 230 and the inverse quantization/transform unit 220, and the quantized coefficients sequence to the inverse quantization unit 220 and the inverse transform unit 225.

The inverse scanning unit 215 converts the quantized coefficients information into two dimensional (2D) inverse quantized transform block. One of a plurality of inverse scan patterns is selected for the conversion. The inverse scan pattern is selected based on the intra prediction mode. If a size of a current transform unit is larger than the predetermined reference size, the quantized transform coefficients of each subset are inversely scanned according to the selected inverse scan pattern to generate quantized transform units. If the size of a transform unit to be decoded is equal to the predetermined reference size, the quantized transform coefficients of the quantized transform block are inversely scanned according to the selected inverse scan pattern to generate quantized transform units. If the quantized transform coefficients are inversely scanned in the unit of subset, same inverse scan pattern is applied to the quantized transform coefficients in each subset. The plurality of subsets consist of one main subset and one or more remaining subsets. The main subset is positioned at an upper left side and includes a DC coefficient, and the one or more remaining subsets cover region other than the main subset.

A scan pattern to be applied to the subsets may be a zigzag scan. The subsets may be inversely scanned beginning with the main subset to the remaining subsets in a forward direction, or can be scanned in the reverse direction. A scan pattern for scanning the subsets may be set the same as a scan pattern for scanning the quantized transform coefficients. The inverse scanning unit 220 performs inverse scanning procedure using information indicating a position of the last non-zero quantized coefficient of the transform unit.

In directional intra prediction mode, the scan pattern may be varied according to the intra prediction mode and the size of the transform unit. In the directional intra prediction mode, the predetermined scan pattern is used if the size of the transfo unit is equal to or larger than a predetermined size, and a scan pattern is adaptively selected based on the directional intra prediction mode if the size of the transform unit is smaller than the predetermined size. The predetermined size is 16x16.

If the size of the transform unit is smaller than the predetermined size, one of three scan patterns is used. The three scan patterns are a first scan pattern (a predetermined scan), a second scan pattern (a horizontal scan) and a third scan pattern (a vertical scan). In vertical intra prediction mode, the second scan pattern is applied because it is highly probable that the non-zero coefficients exist in the horizontal direction. In a predetermined number of directional intra prediction modes adjacent to the vertical intra prediction mode in both sides, the second scan pattern is applied. In horizontal intra prediction mode, the third scan pattern is applied. In the predetermined number of directional intra prediction modes adjacent to the horizontal intra prediction mode in both sides, the third scan pattern is applied. The predetermined number is 3 or 4.

The inverse quantization unit 220 restores a quantization step size to inversely quantize the 2D inverse quantized coefficients. The quantization step size is determined on a coding unit having a size equal to or larger than a predetermined size. If the size of coding units is smaller than the predetermined size, the quantization step size is determined for the predetermined size. The inverse quantization unit 220 may determine a quantization step size of neighboring coding unit as a quantization step size predictor of the current coding unit. For example, the inverse quantization unit 220 may determine the quantization step size of a left coding unit of the current coding unit as the quantization step size predictor of the current coding unit. If the left coding unit is unavailable, the quantization step size of the previous coding unit in scan order is determined as the quantization step size predictor of the current coding unit. Alternatively, an available quantization step size is determined as the quantization step size predictor of the current coding unit when scanning in the order of a left coding unit, above coding unit and a previous coding unit.

When the quantization step size predictor is determined, the quantization step size is obtained by adding the quantization step size predictor and the received residual quantization step size. Then, the inverse quantized coefficients are inversely quantized using a quantization matrix determined according to the quantization step size and a prediction mode.

The inverse transform unit 225 inversely transforms the inverse quantized block to restore a residual block. The inverse transform matrix to be applied to the inverse quantized block is adaptively determined according to the prediction mode (intra or inter) and the intra prediction mode. The determination procedure of the inverse transform matrix is the same as the procedure in the transform unit 120 of FIG. 1.

The adder 270 adds the restored residual block reconstructed by the inverse quantization/transform unit 220 and a prediction block generated by the intra prediction unit 230 or the inter prediction unit 240 to generate a reconstructed block.

The deblocking filter 250 performs deblocking filter process to a restored image generated by the adder 270. By this, blocking artifacts resulted from image loss according to a quantization process can be decreased.

The picture storing unit 260 is a frame memory which stores a reconstructed local image deblocking filtered by the deblocking filter 250.

The intra prediction unit 230 restores the intra prediction mode of the current block based on the received intra prediction mode index, and generates a prediction block according to the restored intra prediction mode.

The inter prediction unit 240 restores motion vectors of the current prediction unit based on the received motion information, and generates a prediction block of the current prediction unit. If motion compensation of decimal precision is applied, the prediction block is generated using an interpolation filter.

The inter prediction unit 240 decodes a motion vector as follows.

The motion vector difference is generated by restoring a difference between the encoded motion vectors.

Available motion vectors of neighboring prediction units existing at predetermined positions are determined as spatial motion vector candidates. And the spatial motion vector candidates are adaptively scaled. If the current prediction unit and the neighboring prediction unit have same reference picture, the motion vector candidate is not scaled. But, if the current prediction unit and the neighboring prediction unit have different reference pictures, the motion vector candidate may be scaled using the temporal distances of the reference pictures.

A motion vector predictor is selected among the spatial motion vector candidates and the temporal motion vector candidates using information indicting motion vector predictor. Then, the motion vector difference and the motion vector predictor are added to generate a motion vector of the current prediction unit.

The temporal motion vector candidate is a motion vector of a prediction unit which is located at or nearby a position in one reference picture corresponding to the position of the current prediction unit. When there exist a plurality of motion vectors of a prediction unit which is located at or nearby a position in one reference picture corresponding to the position of the current prediction unit in the reference picture, one motion vector is selected as a temporal motion vector according to a predetermined method. For example, if the motion vector of the block located at a first position corresponding to the current prediction unit in the picture is available, the motion vector is determined as the temporal motion vector candidate, But, if the motion vector of the block located at the first position is unavailable, the motion vector of a block located at a second position is determined as the temporal motion vector candidate.

In B slice (bi-directional prediction), the reference picture containing the temporal motion vector candidate is derived reference picture list 0 or 1. Therefore, the decoding device determines the reference picture using the list indicator.

Information indicating whether the temporal motion vector candidate is used or not may be included in the bit stream. Therefore, the decoding procedure of the motion vector may vary according to the information.

The spatial motion vector candidates include a left motion vector candidate and an above motion vector candidate. The left motion vector candidate of the current prediction unit is a motion vector of a left prediction unit or a motion vector of a left below prediction unit of the current prediction unit. The left motion vector candidate is a first available motion vector encountered when retrieving the motion vectors of the left prediction unit and the left below prediction unit in a predetermined order. The above motion vector candidate of the current prediction unit is a first available motion vector encountered when retrieving the motion vectors of an above prediction unit, an above right prediction unit and an above left prediction unit of the current prediction unit in a predetermined order.

If motion vector candidates have the same motion vectors, the motion vector candidate having large order is eliminated.

If the motion vector candidate is one, the motion vector candidate is determined as motion vector predictor, and the predictor indicator indicting the motion vector predictor is not encoded.

The intra/inter conversion switch 280 provides a prediction block generated by the intra prediction unit 250 or a motion compensation prediction unit 260 to the adder 235 based on the prediction mode.

An inter prediction decoding method according to the present invention is described. The method comprises a procedure of decoding motion information of the current prediction unit, a procedure of generating a prediction block of the current prediction unit, a procedure of restoring a residual block and a procedure of generating a reconstructed block using the prediction block and the residual block. The motion information includes motion vectors and reference picture indexes.

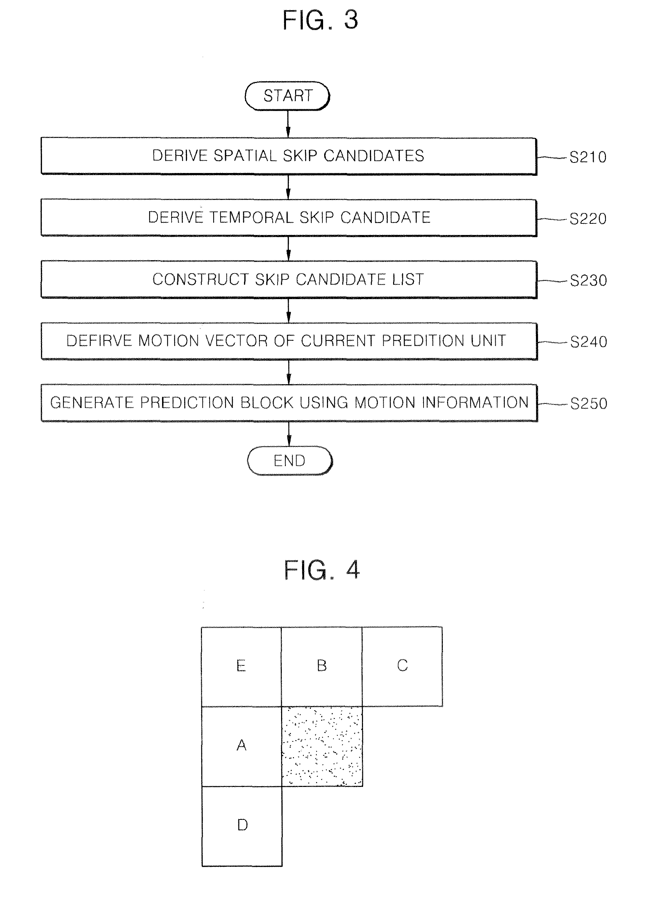

FIG. 3 is a flow chart illustrating a procedure of generating a reconstructed block of a skipped coding unit according to the present invention. When the skip_flag of the received coding unit is 1, the procedure is performed.

First, spatial skip candidates are derived from neighboring prediction units in step S210.

As shown in FIG. 4, motion information of a left prediction unit of the current unit (block A), motion information of an above prediction unit of the current unit (block B), motion information of an above right prediction unit of the current unit (block C) and motion information of a left below prediction unit of the current unit (block D) may be the spatial skip candidates. Motion information of an above left prediction unit of the current unit (block E) can be a spatial skip candidate block if one or more blocks among the blocks A, B, C and D are unavailable. The motion information includes reference picture indexes and motion vectors.

Alternatively, motion information of a left prediction unit (block A), motion information of an above prediction unit (block B) and motion information of a corner prediction unit may be the spatial skip candidate. The corner prediction unit is a first available prediction unit encountered when retrieving the blocks C, D and E in a predetermined order (for example, in the order of block C, block D and block E, in the order of block E, block D and block C, and so on).

The availability is checked on each neighboring prediction unit. If the prediction unit does not exist or the prediction mode of the prediction unit is the intra mode, the prediction unit is determined as unavailable.

When there are a plurality of left prediction units, a first available prediction unit encountered when checking availability of the plurality of left prediction units in a predetermined order (for example, from top to bottom or from bottom to top) may be determined as the left prediction unit, or an uppermost left prediction unit or a lowest left prediction unit may be determined as the left prediction unit. When there are a plurality of above prediction units, a first available prediction unit encountered when checking availability of the plurality of above prediction units in a predetermined order (for example, from left to right or from right to left) may be determined as the above prediction unit, or a leftmost above prediction unit or a rightmost above prediction unit may be determined as the above prediction unit.

The temporal skip candidate is derived in step S220. The step S220 comprises a step for deriving a reference picture index for a temporal skip candidate and a step for deriving a motion vector of the temporal skip candidate,

In the step for deriving the reference picture index for the temporal skip candidate, the reference picture index for the temporal skip candidate is derived. The reference picture index for temporal skip candidate may be set to 0. Or the reference picture index for the temporal skip candidate may be derived using reference picture indexes of spatially neighboring prediction units.

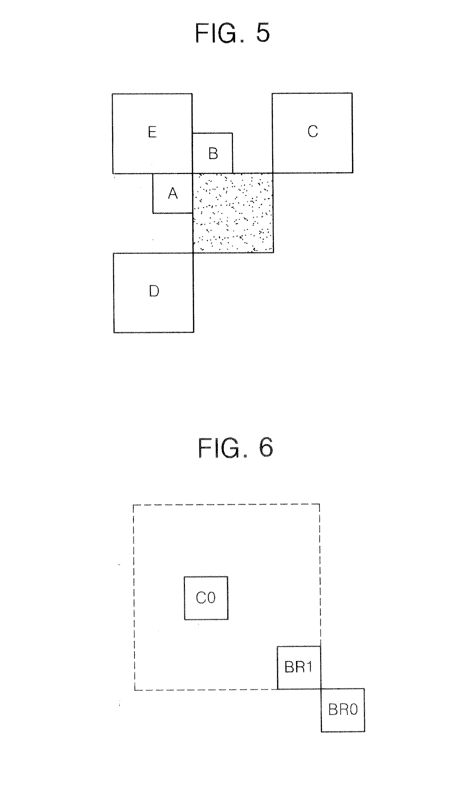

FIG. 5 is a conceptual diagram showing the positions of prediction units adjacent to a current prediction unit used to derive a reference picture index for a temporal skip candidate according to the present invention. The reference picture index for temporal skip candidate is one of the reference picture indexes of the neighboring prediction units.

The reference picture indexes of a left prediction unit (block A), an above prediction unit (block B), an above right prediction unit (block C), a below left prediction unit (block D) and an above right unit (block E) may be used to derive the reference picture index for temporal skip candidate.

When there are a plurality of above prediction units, a first available prediction unit encountered when retrieving the plurality of above prediction units from left to right or from right to left may be determined as the above prediction unit. And the reference picture index of the first available unit is determined as the reference picture index of the above prediction units. When there are a plurality of left prediction units, a first available prediction unit encountered when retrieving the plurality of left prediction units from top to bottom may be determined as the left prediction unit. And the reference picture index of the first available unit is determined as the reference picture index of the left prediction units.

A reference picture index of a corner prediction unit is a reference picture index of a first available prediction unit encountered when retrieving the blocks in the order of block C, block D and block E.

When the reference picture index of the left neighboring prediction unit (left reference picture index), the reference picture index of the above neighboring prediction unit (above reference picture index) and the reference picture index of the corner neighboring prediction unit (comer reference picture index) are determined, the reference picture index for the temporal skip candidate is derived from them. Here, the only one of the blocks C, D and E is used to derive the reference picture index for a temporal skip candidate. But, blocks C and D (4 candidates) or all of the blocks C, D and E (5 candidates) may be used to derive the reference picture index for the temporal skip candidate. Hereinafter, the case that all of the left reference picture index, the above reference picture index and the corner reference picture index are used, will be described.

The reference picture index of the highest frequency out of available reference picture indexes is determined as the reference picture index for the temporal skip candidate. When there are a plurality of the reference picture indexes having highest frequency, the lowest reference picture index is determined as the reference picture index for the temporal skip candidate.

The step for deriving motion vector for a temporal skip candidate is as follows.

First, a picture (a temporal skip candidate picture) to which the temporal skip candidate block belongs is derived. For example, a reference picture of index 0 may be determined as the temporal skip candidate picture, A first picture of a list 0 is determined as the temporal skip candidate picture when the slice type is P. When the slice type is B, one reference picture list is selected using a flag of slice header indicating the reference picture list to which the temporal skip candidate belongs, and a picture of which reference picture index is 0 from the selected reference picture list is determined as the temporal skip candidate picture. For example, when the flag is 1, the temporal skip candidate picture is selected from the list 0. And when the flag is 0, the temporal skip candidate picture is selected from the list 1.

Alternatively, a reference picture indicated by a reference picture index for the temporal skip candidate picture is determined as the temporal skip candidate picture which the temporal skip candidate block belongs to. For example, the reference picture indicated by the reference picture index for the temporal skip candidate picture in the list 0 is determined as the temporal skip candidate picture when the slice type is P. When the slice type is B, the reference picture list is selected using the flag indicating the temporal skip candidate picture and the reference picture indicated by the reference picture index for the temporal skip candidate picture is determined as the temporal skip candidate picture.

Next, a temporal skip candidate block is derived. One of a plurality of blocks corresponding to the current prediction unit is selected as the temporal skip candidate block. The plurality of blocks are located within the temporal skip candidate picture. A priority is assigned to each of the plurality of blocks. A first available block determined based on the priorities is selected as the temporal skip candidate block.

FIG. 6 is a conceptual diagram illustrating blocks in a temporal skip candidate picture corresponding to a current prediction unit according to the present invention.

It is preferred that a position of the temporal skip candidate block is different from positions of spatial skip candidate blocks.

Thus, a below left corner block (block BR0) or a lower left block (block BR1) may be a first skip candidate block. The below left corner block (block BR0) is adjacent to a block which is included in the temporal skip candidate picture and corresponds to the current prediction unit. The lower left block (block BR1) is located inside of a block which is included in the temporal skip candidate picture and corresponds to the current prediction unit. A block (block C) including an upper left pixel or a below right pixel of the center position of a block which is included in the temporal skip candidate picture and corresponds to the current prediction unit may be a second skip candidate block.

If the first skip candidate block is available, the first skip candidate block is determined as the temporal skip candidate block. If the first skip candidate block is not available and the second skip candidate block is available, the second skip candidate block is determined as the temporal skip candidate block.

Alternatively, the blocks may be scanned in the order of BR0, BR1 and C0. Also, there exist a plurality of available temporal skip candidate blocks, a largest corresponding block or a median value of the available temporal skip candidate blocks may be determined as a temporal skip candidate motion vector.

When the temporal skip candidate block is determined, a motion vector of the temporal skip candidate block is set as the temporal skip candidate motion vector.

Next, a skip candidate list is constructed in step S230.

The skip candidate list is constructed using available spatial skip candidates and available temporal skip candidates. The skip candidate list may be constructed in the order of a spatial left skip candidate (candidate A), a spatial above skip candidate (candidate B), a temporal skip candidate, a spatial above right skip candidate (candidate C) and a spatial below left skip candidate (candidate D), or in the order of a temporal skip candidate, a spatial left skip candidate (candidate A), a spatial above skip candidate (candidate B), a spatial above right skip candidate (candidate C) and a spatial below left skip candidate (candidate D).

When one or more of the candidates A, B, C, D are not available, the spatial above left skip candidate (candidate E) is added to the position of the unavailable candidate in the skip candidate list. That is, availability of each spatial skip candidate is checked in the order of priority of each spatial skip candidate, and the spatial above left skip candidate (candidate E) is added to the position of the unavailable candidate in the skip candidate list. The priority is assigned in the order of candidate A, candidate B, candidate C and candidate D or candidate A, candidate D, candidate B and candidate C.

If a plurality of candidates have same motion information, the candidate having lower priority is deleted from the skip candidate list. The motion information includes motion vector and reference picture index.

Next, the motion vector and the reference picture index of the current prediction unit are derived in step S240.

When there is a skip index in the received prediction unit, the motion vector and the reference picture index of the skip candidate indicated by the skip index are determined as the motion vector and the reference index of the current prediction unit.

When there is not the skip index in the received prediction unit and there exists a skip candidate, the motion vector and the reference picture index of the skip candidate are determined as the motion vector and the reference index of the current prediction unit.

When there is not the skip index in the received prediction unit and there does not exist at least one skip candidate, the motion vector and the reference index of the current prediction unit are set to 0.

When the skip candidate indicates the temporal skip candidate, the motion vector of the skip candidate block is determined as the motion vector of the current prediction unit and 0 or the reference picture index for the temporal skip candidate is determined as the reference picture index of the current prediction unit.

The skip index may have been coded using a variable length coding (VLC) table determined by the number of the available skip candidates. If the skip index has been coded using a VLC table determined by the number of the available skip candidates, a step for decoding the skip index using a VLC table corresponding to the number of the available skip candidates may be inserted between the step 230 and the step 240. In step S240, a motion vector of the current prediction unit is determined using the decoded skip index. Alternatively, the number of skip candidates may be fixed. If the number of skip candidates is fixed, the skip candidate list may be constructed by generating skip candidates corresponding to one or more unavailable skip candidates using the available skip candidates.

If the motion vector and the reference picture index of the current prediction unit are derived, a prediction block is generated using the motion vector of a picture indicated by the reference picture index in step S250. The prediction block is a reconstructed block.

Meanwhile, when the skip_flag in the coding unit is 0 and merge_flag in the received prediction unit is 1, a procedure of generating a reconstructed block is almost same as the procedure of generating a reconstructed block of the skipped coding unit. Specifically, the procedure of generating a prediction block is same as the procedure of generating a prediction block of the skip mode. In the skip mode, the generated prediction block is the reconstruction block because the residual block is 0. However, the residual block is not zero in the merge mode, a step for restoring a residual block and a step for generating a reconstructed block by adding the prediction block and the residual block are added.

Available spatial and temporal merge candidates are derived from neighboring prediction units. Procedures for obtaining the spatial merge candidates and the temporal merge candidates are the same as the spatial skip candidates and the temporal skip candidate, respectively.

Next, an available merge candidate list is constructed. The available spatial merge candidates and the available temporal merge candidates are arranged in a predetermined order. The predetermined order is the order of a spatial left merge candidate (candidate A), a spatial above merge candidate (candidate B), a temporal merge candidate, a spatial above right merge candidate (candidate C) and a spatial below left merge candidate (candidate D), or in the order of a temporal merge candidate, a spatial left merge candidate (candidate A), a spatial above merge candidate (candidate B), a spatial above right merge candidate (candidate C) and a spatial below left merge candidate (candidate D).

When one or more of the merge candidates A, B, C, D are not available, the spatial above left merge candidate (candidate E) is added to the position of the unavailable candidate in the merge candidate list. That is, availability of each spatial merge candidate is checked in the order of priority of each spatial merge candidate, and the spatial above left merge candidate (candidate E) is added to the position of the unavailable candidate in the merge candidate list. The priority is assigned in the order of A, B, C and D or A, D, B and C.

Also, the predetermined order may be changed or one or more merge candidates are excluded from the merge candidates according to a prediction mode of the prediction unit. For example, if the prediction unit is 2NxN, the spatial below left merge candidate (candidate D) may be excluded. If the prediction unit is Nx2N, the orders of the spatial below left merge candidate (candidate D) and the spatial upper right merge candidate (candidate C) are changed or the spatial upper right merge candidate (candidate C) is excluded because correlation between the spatial below left merge candidate (candidate D) and the current prediction unit is higher than that of between the spatial above right merge candidate (candidate C) and the current prediction unit.

Next, the motion vector and the reference picture index of the current prediction unit are derived. When there is a merge index in the received prediction unit, the motion vector and the reference picture index of the merge candidate indicated by the merge index in the merge candidate list are determined as the motion vector and the reference index of the current prediction unit.

When there is not a merge index in the received prediction unit and there exists a merge candidate, the motion vector and the reference picture index of the merge candidate are determined as the motion vector and the reference index of the current prediction unit.

When there is not a merge index in the received prediction unit and there does not exist at least one skip candidate, the motion vector and the reference index of the current prediction unit are set to 0.

When the merge candidate indicates the temporal merge candidate, the motion vector of the temporal merge candidate is determined as the motion vector of the current unit. And 0 or the reference picture index for the temporal merge candidate may be determined as the reference picture index of the current prediction unit.

The merge index may have been coded using a VLC table determined by the number of the available merge candidates. If the merge index has been coded using a VLC table determined by the number of the available merge candidates, a step for counting the number of the available skip candidates and decoding the skip index using a VLC table corresponding to the number may be inserted.

If the motion vector and the reference picture index of the current prediction unit are derived, a prediction block is generated using a motion vector in a picture indicated by the reference picture index.

Also, a residual block is restored in the unit of transform units. The residual block is restored through entropy decoding, inverse scan, inverse quantization and inverse transform. The procedure is performed by the entropy decoding unit 210, the inverse scanning unit 215, the inverse quantization unit 220 and the inverse transform unit 225 of the decoding apparatus of FIG. 2.

Finally, a reconstructed block is generated using the prediction block and the residual block. The reconstructed block may be generated in the unit of coding units. Therefore, after the prediction block and the residual block are generated in the coding units respectively, and the reconstructed block is generated using the prediction block in the unit of coding unit and the residual block in the unit of coding unit.

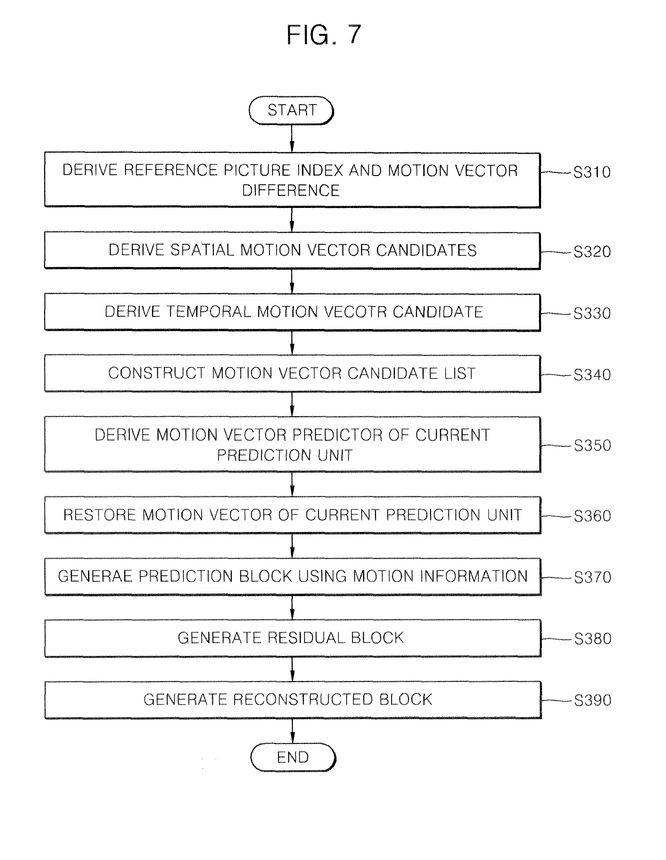

FIG. 7 is a flow chart illustrating a procedure of generating a reconstructed block of a motion vector prediction coded prediction unit according to the present invention. When the skip_flag in a coding unit is 0 and the merge_flag in a received prediction unit is 0, this procedure is applied.

First, a reference picture index and a motion vector difference of a current prediction unit are obtained from a prediction unit syntax of the received bit stream in step S310.

If slice type is B, inter prediction information is checked. If the inter prediction information indicates a uni-directional prediction using combined reference picture list (Pred_LC), a reference picture among the reference pictures of the combined reference picture list (list_c) is selected using the reference picture index, and the motion vector difference is restored. If the inter prediction information indicates a uni-directional prediction using a reference picture list 0, a reference picture is selected using the reference picture index of the reference picture list 0, and the motion vector difference is restored. If the inter prediction information indicates an bi-directional prediction, each reference picture is selected using each reference picture index of the reference picture lists 0 and 1, and each motion vector difference for each reference picture is restored.

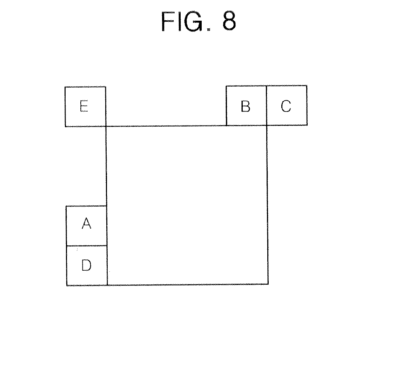

Next, spatial motion vector candidates are derived in step S320. FIG. 8 is a conceptual diagram showing positions of neighboring prediction units used to generate motion vector candidates according to the present invention.

A spatial left motion vector candidate may be one of left prediction units (blocks A and D) of a current prediction unit. A spatial above motion vector candidate block may be one of above prediction units (blocks B, C and E) of the current prediction unit.

A procedure for deriving a spatial left motion vector candidate is as follows.

It is checked whether there is a prediction unit satisfying first conditions by retrieving the left blocks of the current prediction unit in the order of blocks A and D or in the order of blocks D and A. The first conditions are 1) there exists a prediction unit, 2) the prediction unit is an inter prediction coded unit, 3) the prediction unit has same reference picture as that of the current prediction unit and 4) the prediction unit a has same reference picture list as that of the current prediction unit. If there is a prediction unit satisfying the first conditions, the motion vector of the prediction unit is determined as the spatial left motion vector candidate.

If there is not a prediction unit satisfying the first conditions, it is checked whether there is a prediction unit satisfying second conditions. The second conditions are 1) there exists a prediction unit, 2) the prediction unit is an inter prediction coded unit, 3) the prediction unit has same reference picture as that of the current prediction unit and 4) the prediction unit has different reference picture list from that of the current prediction unit. If there is a prediction unit satisfying the second conditions, the motion vector of the prediction unit is determined as the spatial left motion vector candidate.

If there is not a prediction unit satisfying the second conditions, it is checked whether there is a prediction unit satisfying third conditions. The third conditions are 1) there exists a prediction unit, 2) the prediction unit is an inter prediction coded unit, 3) the prediction unit has same reference picture list as that of the current prediction unit and 4) the prediction unit has different reference picture from that of the current prediction unit. If there is a prediction unit satisfying the third conditions, the motion vector of the prediction unit is determined as the spatial left motion vector candidate.

If there is not a prediction unit satisfying the third conditions, it is checked whether there is a prediction unit satisfying fourth conditions. The fourth conditions are 1) there exists a prediction unit, 2) the prediction unit is an inter prediction coded unit, 3) the prediction unit has different reference picture list from that of the current prediction unit and 4) the prediction unit has different reference picture from that of the current prediction unit. If there is a prediction unit satisfying the fourth conditions, the motion vector of the prediction unit is determined as the spatial left motion vector candidate.

The motion vector of the prediction unit satisfying the first conditions or the second conditions is not scaled. But, the motion vector of the prediction unit satisfying the third conditions or the fourth conditions is scaled.

If there is not a prediction unit satisfying any one conditions, the spatial left motion vector candidate is unavailable.

A procedure for deriving a spatial above motion vector candidate is as follows.

It is checked whether there is a prediction unit satisfying first conditions by retrieving the above blocks in the order of blocks B, C and E or in the order of blocks C, B and E. If there is a prediction unit satisfying the first conditions, the motion vector of the prediction unit is determined as the spatial above motion vector candidate.

If there is not a prediction unit satisfying the first conditions, it is checked whether there is a prediction unit satisfying the second conditions. If there is a prediction unit satisfying the second conditions, the motion vector of the prediction unit is determined as the spatial above motion vector candidate.

If there is not a prediction unit satisfying the second conditions, it is checked whether there is a prediction unit satisfying the third conditions. If there is a prediction unit satisfying the third conditions, the motion vector of the prediction unit is determined as the spatial above motion vector candidate.

If there is not a prediction unit satisfying the third conditions, it is checked whether there is a prediction unit satisfying the fourth conditions. If there is a prediction unit satisfying the fourth conditions, the motion vector of the prediction unit is determined as the spatial above motion vector candidate.

The motion vector of the prediction unit satisfying the first conditions or the second conditions is not scaled. But, the motion vector of the prediction unit satisfying the third conditions or the fourth conditions is scaled.

If there is not a prediction unit satisfying any one conditions, the spatial above motion vector candidate is unavailable.

The first to fourth conditions for determining the spatial left motion vector candidate are same those for determining the spatial above motion vector candidate.

A temporal motion vector candidate is derived in step S330. First, a picture (a temporal skip candidate picture) to which a temporal motion vector candidate block belongs is derived. A reference picture of index 0 may be determined as the temporal motion vector candidate picture. For example, a first picture of the reference picture list 0 is determined as the temporal motion vector candidate picture when the slice type is P. When the slice type is B, the temporal motion vector candidate picture is determined using a flag of a slice header indicating a list to which the temporal motion vector candidate. For example, if the flag is 1, the temporal motion vector candidate picture is determined from list 0, and if the flag is 0, the temporal motion vector candidate picture is determined from list 1. Alternatively, a picture indicated by a reference picture index obtained from a prediction unit is determined as the temporal motion vector candidate picture.

Next, a temporal motion vector candidate block in the temporal motion vector candidate picture is derived. The temporal motion vector candidate block is the same as the temporal skip candidate block. If the temporal motion vector candidate block is derived, the motion vector of the temporal motion vector candidate block is determined as the temporal motion vector candidate.

Next, a motion vector candidate list is constructed in step S340. The motion vector candidate list is constructed using available spatial and temporal motion vector candidates. The motion vector candidate list may be constructed in a predetermined order. The predetermined order is the order of a spatial left motion vector candidate, a spatial above motion vector candidate and a temporal motion vector candidate, or the order of a temporal motion vector candidate, a spatial left motion vector candidate and a spatial above motion vector candidate.

The predetermined order may be changed or one or more motion vector candidates are excluded from the motion vector candidates according to a prediction mode of the prediction unit. For example, if the current prediction unit is divided into two 2NxN prediction units, the spatial above motion vector candidate may be excluded for a lower 2NxN prediction unit. If the current prediction unit is divided into two Nx2N prediction units, the orders of the spatial above motion vector candidate and the spatial left motion vector candidate are changed or the spatial left motion vector candidate may be excluded for a right Nx2N prediction unit.

Alternatively, when a coding unit is divided into two 2NxN prediction units, the above 2NxN prediction block may be merged. If the above 2NxN prediction block may not be merged, the block D may be deleted or blocks A and D are scanned in this order when determining the spatial left motion vector candidate. When a coding unit is divided into two Nx2N prediction units, same method is applied for the spatial above motion vector candidate.

Next, if a plurality of candidates have same motion vector, the candidate having lower priority is deleted in the motion vector candidate list.

Next, a motion vector predictor of the current prediction unit is obtained in step S350.

When there is a motion vector index in the prediction unit, the motion vector candidate of a corresponding index in the motion vector candidate list is determined as the motion vector predictor of the current prediction unit. When there is not a motion vector index in the received prediction unit and there exists a motion vector candidate, the motion vector candidate is determined as the motion vector predictor of the current prediction unit. When all motion vector candidates are not available, the motion vector predictor of the current unit is set to 0.

Meanwhile, prior to construction of the motion vector candidate list, the motion vector index may be read. In this case, after retrieving available motion vector candidate by the number indicated by the motion vector index in a predetermined order, the motion vector candidate corresponding to the motion vector index may be determined as the motion vector of the current prediction unit. The motion vector index may be encoded in a fixed length or in a variable length.

If the motion vector predictor of the current prediction unit is obtained, a motion vector of the current prediction unit is reconstructed by adding the motion vector difference and the motion vector predictor in step S360.

Next, a prediction block is generated using the received reference picture index of the current prediction unit and the restored motion vector of the current prediction unit in step S370.

Also, a residual block is restored in the unit of transform units in step S380. The residual block is restored through entropy decoding, inverse scan, inverse quantization and inverse transform. The procedure is performed by the entropy decoding unit 210, the inverse scanning unit 215, the inverse quantization unit 220 and the inverse transform unit 225 of the decoding apparatus of FIG. 2.

Finally, a reconstructed block is generated using the prediction block and the residual block in step S390. The reconstructed block may be generated in the unit of coding units, Therefore, after the prediction block and the residual block are generated in the unit of coding units respectively, and the reconstructed block is generated using the prediction block in the unit of coding unit and the residual block in the unit of coding unit.

While the invention has been shown and described with reference to certain exemplary embodiments thereof, it will be understood by those skilled in the art that various changes in form and details may be made therein without departing from the spirit and scope of the invention as defined by the appended claims.

## Claims

1. An inter prediction encoding method, comprising:
determining a reference picture index and a motion vector of a current prediction unit;
determining available motion vectors of prediction units located at a predetermined position adjacent to the current prediction unit as spatial motion vector candidates,
determining available temporal motion vector candidates of the current prediction unit;
determining one of the spatial and the temporal motions vector candidates as a motion vector predictor of the current prediction unit; and
calculating a motion vector difference between the motion vector of the current prediction unit and the motion vector predictor, and encoding the motion vector difference and the reference picture index,
wherein the temporal motion vector candidate is a motion vector of a prediction unit which is located at or nearby a position in a reference picture coded previously corresponding to the position of the current prediction unit.

2. The method of claim 1, wherein the temporal motion vector candidate is an available motion vector encountered first when retrieving the reference picture in the order of a first predetermined position and a second predetermined position.

3. The method of claim 2, wherein, if the motion vectors of the first and the second positions are unavailable, the temporal motion vector candidate is determined as unavailable.

4. The method of claim 1, wherein, if a slice type is B, a reference picture to which a temporal motion vector candidate belongs is selected among reference pictures of reference picture lists 0 and 1, and information indicating the selected reference picture list is encoded.

5. The method of claim 1, wherein it is determined whether the temporal motion vector candidate is used or not, and information indicating the selected reference picture list is encoded.

6. The method of claim 1, wherein available left motion vector and available above motion vector of the current prediction unit is determined as the spatial motion vector candidates.

7. The method of claim 6, wherein the spatial left motion vector candidate is an available motion vector encountered when retrieving motion vectors of a left prediction unit and a below left prediction unit in a predetermined order.

8. The method of claim 6, wherein the spatial left motion vector candidate is an available motion vector encountered when retrieving motion vectors of an above prediction unit, above right prediction unit and above left prediction unit in a predetermined order.

9. The method of claim 1, wherein the available spatial motion vector candidate is adaptively scaled.

10. The method of claim 1, wherein the available spatial motion vector candidate is scaled according to a temporal distance between a reference picture of the current prediction unit and a reference picture of the available spatial motion vector candidate.
